(19) Europäisches Patentamt
European Patent Office
Office européen des brevets

(11) **EP 3 152 853 B1**

(12) **EUROPEAN PATENT SPECIFICATION**

(45) Date of publication and mention
of the grant of the patent:
**09.10.2019 Bulletin 2019/41**

(51) Int Cl.:
*H04L 1/00* *(2006.01)*        *H04L 5/00* *(2006.01)*
*H03M 13/27* *(2006.01)*

(21) Application number: **15806726.4**

(22) Date of filing: **08.05.2015**

(86) International application number:
**PCT/US2015/029920**

(87) International publication number:
**WO 2015/191196 (17.12.2015 Gazette 2015/50)**

(54) **INTERLEAVER FOR MULTIUSER TRANSMISSION**

INTERLEAVER ZUR MEHRBENUTZERÜBERTRAGUNG

ENTRELACEUR POUR ÉMISSION MULTIUTILISATEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.06.2014 US 201462009774 P**
**14.11.2014 US 201414541887**

(43) Date of publication of application:
**12.04.2017 Bulletin 2017/15**

(73) Proprietor: **Intel IP Corporation**
**Santa Clara, CA 95054 (US)**

(72) Inventors:
• **LI, Qinghua**
**San Ramon, California 94582 (US)**
• **CHEN, Xiaogang**
**US-97229 Portland (US)**
• **ZHU, Yuan**
**Beijing 11 100012 (CN)**
• **LI, Honggang**
**Beijing 11 100080 (CN)**

(74) Representative: **HGF Limited**
**Fountain Precinct**
**Balm Green**
**Sheffield S1 2JA (GB)**

(56) References cited:
WO-A1-2008/002078        WO-A1-2009/088911
US-A1- 2006 062 289        US-A1- 2008 069 255
US-A1- 2008 232 495        US-A1- 2010 260 115
US-A1- 2011 293 029        US-A1- 2015 063 484

Description

BACKGROUND

This patent application claims priority to and the benefit of U.S. Patent Application No. 14/541,887, filed on November 14, 2014 and titled "INTERLEAVER FOR MULTIUSER TRANSMISSION," which claims priority to and the benefit of U.S. Provisional Application No. 62/009,774, filed on June 9, 2014 and titled "OFDM GENERA TED BASIC RESOURCE UNITS FOR WIFI".

Orthogonal Frequency Division Multiple Access (OFDMA) is a technique for multiuser support in high efficiency Wi-Fi (HEW). One challenge in OFDMA is how optimally use the allocated bandwidth and variation in usable tones, as the available bandwidth depends on the resource allocation. Depending on the allocated bandwidth, the number of usable tones for data transmission varies. In addition, the link direction (i.e., downlink or uplink) also affects the number of usable tones for the data transmission. For example, the numbers of pilot tones in the downlink and uplinks may be different, thus the number of usable tones for data transmission are also different.

Furthermore, the number of usable tones depends on the allocation position. For the same allocated bandwidth, the allocation at a band edge may use some number of tones as band guard tones for reducing out-of-band emission, but the allocation at band center may not use guard tones. The size of the usable resource carrying the data therefore dynamically changes from burst to burst. This may affect processing such as interleaving and link adaptation in the transceiver chains. US 2010/260115 A1 describes the provision of automatic control channel mapping whereby overhead symbols are excluded before performing interleaving.

BRIEF DESCRIPTION OF THE FIGURES

The detailed description is set forth with reference to the accompanying figures. In the figures, the left-most digit(s) of a reference number identifies the figure in which the reference number first appears. The use of the same reference numbers in different figures indicates similar or identical items.

FIG. 1 is a network diagram illustrating an exemplary network environment according to an embodiment of the present technique;

FIG. 2 is a schematic diagram of resource allocation and tones according to an embodiment of the present technique;

FIG. 3 is a diagram of a block interleaver according to an embodiment of the present technique;

FIG. 4 is a diagram of a block interleaver according to an embodiment of the present technique;

FIGS. 5A and 5B are a table of a block interleaver according to an embodiment of the present technique;

FIG. 6 is table of a block interleaver having null bits according to an embodiment of the present technique;

FIG. 7 shows a functional diagram of an exemplary communication station according an embodiment of the present technique; and

FIG. 8 shows a block diagram of an example of a machine upon which, any of one or more techniques (e.g., methods) discussed herein may be performed.

Certain implementations will now be described more fully below with reference to the accompanying drawings, in which various implementations and/or aspects are shown. However, various aspects may be implemented in many different forms and should not be construed as limited to the implementations set forth herein; rather, these implementations are provided so that this disclosure will be thorough and complete, and will fully convey the scope of the disclosure to those skilled in the art. Like numbers refer to like elements throughout.

DETAILED DESCRIPTION

Embodiments herein relate to, among other things, a codebit interleaver or symbol interleaver for data transmission using an orthogonal frequency division multiple access (OFDMA) modulated resource allocation. The resource allocation may include an allocated bandwidth and varying usable tones based on the allocation of DC tones, guard band tones, and pilot tones (also collectively referred to as "overhead" tones). The interleaver may be selected according to the number of usable tones and may be generated for each resource allocation to accommodate the variance in usable tones. In some embodiments, the interleaver may be dynamically generated. The codebit interleaver or symbol interleaver may be a block interleaver in which bits are sequentially read in row by row and read out column by column, such that any unfilled entries in the block interleaver are skipped.

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

The word "exemplary" is used herein to mean "serving as an example, instance, or illustration." Any embodiment described herein as "exemplary" is not necessarily to be construed as preferred or advantageous over other embodiments.

The terms "communication station", "station", "handheld device", "mobile device", "wireless device" and "user equipment" (UE) as used herein refers to a wireless communication device such as a cellular telephone, smartphone, tablet, netbook, wireless terminal, laptop computer, a femtocell, High Data Rate (HDR) subscriber station, access point, access terminal, or other personal communication system (PCS) device. The device may be either mobile or stationary.

The term "access point" (AP) as used herein may be a fixed station. An access point may also be referred to as an access node, a base station or some other similar terminology known in the art. An access terminal may also be called a mobile station, user equipment (UE), a wireless communication device or some other similar terminology known in the art.

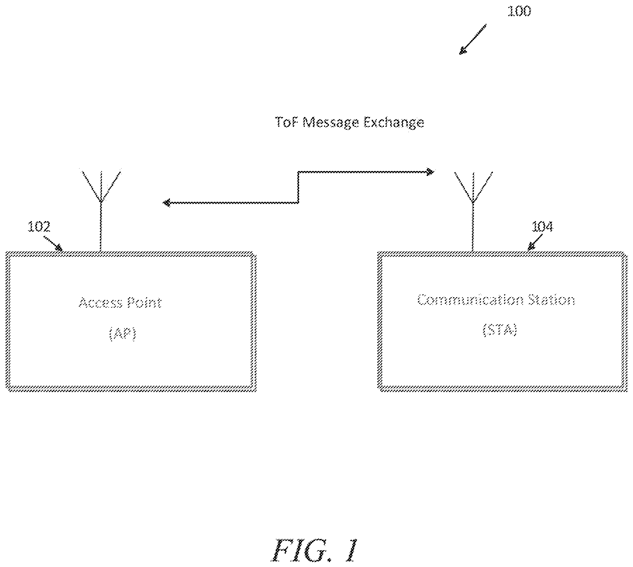

FIG. 1 is a network diagram illustrating an exemplary network environment for use with an embodiment of the present technique. Wireless network 100 includes a plurality of communication stations (STAs) 104 and one or more access points (APs) 102, which may communicate in accordance with IEEE 802.11 communication techniques. The communication stations 104 may be mobile devices that are non-stationary and do not have fixed locations. The one or more APs may be stationary and have fixed locations. The stations may include an AP communication station (AP) 102 and one or more responding communication stations STAs 104.

In accordance with some IEEE 802.11ax (High-Efficiency Wi-Fi (HEW)) embodiments, an access point may operate as a master station which may be arranged to contend for a wireless medium (e.g., during a contention period) to receive exclusive control of the medium for an HEW control period (i.e., a transmission opportunity (TXOP)). The master station may transmit an HEW master-sync transmission at the beginning of the HEW control period. During the HEW control period, HEW stations may communicate with the master station in accordance with a non-contention based multiple access technique. This is unlike conventional Wi-Fi communications in which devices communicate in accordance with a contention-based communication technique, rather than a multiple access technique. During the HEW control period, the master station may communicate with HEW stations using one or more HEW frames. During the HEW control period, legacy stations refrain from communicating. In some embodiments, the master-sync transmission may be referred to as an HEW control and schedule transmission.

In some embodiments, the multiple-access technique used during the HEW control period may be a scheduled orthogonal frequency division multiple access (OFDMA) technique, although this is not a requirement. The master station may also communicate with legacy stations in accordance with legacy IEEE 802.11 communication techniques. In some embodiments, the master station may also be configurable to communicate with HEW stations outside the HEW control period in accordance with legacy IEEE 802.11 communication techniques, although this is not a requirement

In some embodiments, the links of an HEW frame may be configurable to have the same bandwidth and the bandwidth may be one of 20MHz, 40MHz, or 80MHz contiguous bandwidths or an 80+80MHz (160MHz) non-contiguous bandwidth. In some embodiments, a 320MHz contiguous bandwidth may be used. In some embodiments, bandwidths of 5MHz and/or 10MHz may also be used. In these embodiments, each link of an HEW frame may be configured for transmitting a number of spatial streams.

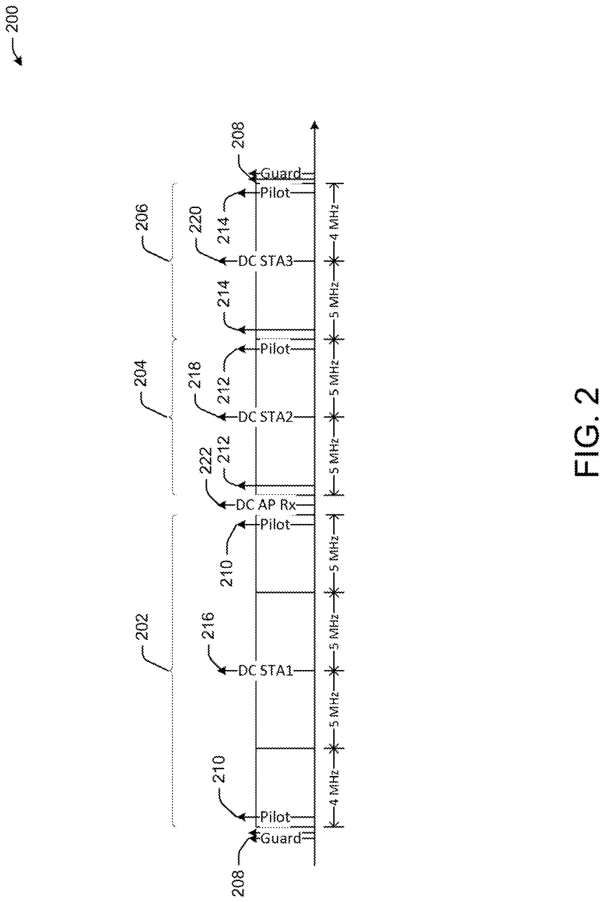

FIG. 2 is a schematic diagram 200 illustrating the variation in resource allocation and usable tones in accordance with embodiments of the present technique. FIG. 1 depicts tone allocation for an uplink with a 20 MHz allocation 202 for a first wireless station, a second 10 MHz allocation 204 for a second wireless station and a third 10 MHz allocation 206 for a third wireless station. FIG. 2 also illustrates the various tones allocated for pilot tones, guard band tones, and DC tones (i.e., overhead tones). Guard band tones 208 are depicted at the lower and upper frequency boundaries of the uplink and occupy a guard band of 1 MHz. Pilot tones 210 for the first wireless station, pilot tones 212 for the second wireless station, and pilot tones 214 for the third wireless station are also depicted. Additionally, a one or more DC tones 216 for the first wireless station, a one or more DC tones 218 for the second wireless station, one or more DC tones 220 for the third wireless station, and one or more DC tones 222 for an access point's (AP) receiver (Rx) are depicted. In some embodiments, the number of DC tones may depend on the ton spacing or FFT size (e.g., 64, 256, etc.) For example, for an FFT of 64 on 20 MHz bandwidth with 312.5 kHz tone spacing, one DC tone may be used. For an FFT of 256 on 20 MHz bandwidth with 0.078125 MHz tone spacing, three or more DC tones may be used.

As shown in FIG. 2, after removal of the tones for DC tones, pilot tones, and guard band, the leftover tones for data transmission may vary with link direction, bandwidth allocation and the allocation position. For example, the third wireless station mentioned above may be allocated 5 MHz with 64 FFT. Additionally, the number of data subcarriers may be 16 in the downlink and 14 in the uplink as the same pilot tones in the downlink can be shared by multiple users within, for example, a 20 MHz band. In another example, if the allocated subband is at the band center, the allocated subband may have 2-5 more subcarriers than an allocated subband at the band edge due to loss of some subcarriers for guard bands at the band edge. Thus, the allocated subbands and usable tones for data communication may vary due to the factors described above and other factors. In some existing systems, puncturing may be used to adapt to the variation of data tones. In such systems, the overhead tones may be accommodated by puncturing for the overhead tones at a cost of some performance degradation.

As described further, embodiments of the present technique are directed to an interleaver selected for each allocation and according to the number of usable tones for data transmission. The interleaver can be applicable to codebits or data symbols such as QAM symbols. As described below, the indexing algorithms for the interleaver are similar to existing algorithms used for full bandwidth allocation and use low complexity operations such as floor and mod to minimize processing complexity. The generated indexes described below may be used for both interleaving and de-interleaving. Advantageously, as the indexes may be dynamically generated according to the actual bandwidth allocated, the interleaver provides flexibility to the resource allocation. Consequently, any size of bandwidth within the available bandwidth may be allocated to a user. Additionally, to reduce complexity, existing bit mappers and constellation mappers may be reused with the interleaver.

The interleaver described herein may be determined by modification of one of the three legacy interleavers for OFDMA transmissions (as used herein, the term "legacy interleaver" refers to existing non-dynamic interleavers). In some embodiments, the interleaver is based on the legacy interleaver that captures most of the frequency diversity gain. The legacy interleaver is shown below in Equation 1:

$$i = N_r(k \bmod N_c) + \left\lfloor \frac{k}{N_c} \right\rfloor$$

$$(1)$$

Where $k$ is the input bit index, $i$ is the output bit index, $N_r$ is the number of rows in the block interleaver, $N_c$ is the number of columns in the block interleaver, $\lfloor \rfloor$ is the floor function, and mod is the modulo operator.

In legacy protocols such as 802.11a, 802.11n, 802.11ac, etc., the number of usable tones for data transmission per OFDM symbol per spatial stream may be represented by Equation 2:

$$\frac{N_r N_c}{Q}$$

$$(2)$$

Where $Q$ is the number of codebits carried by each quadrature amplitude modulation (QAM) symbol and $N_c$ is greater than 10 (which corresponds to more than 3 MHz) for sending adjacent codebits to uncorrelated subcarriers in the frequency domain.

The number of usable data tones in a given resource allocation may be denoted by $N_d$. As described below, the existing block interleaver described in Equation 1 may be modified to handle any number of usable data tones. A column number $N_c$ for the interleaver of the present technique may be selected to ensure that $N_c$ multiplied by the tone spacing should correspond to a large enough frequency separation. In some embodiments, the frequency may be 3 MHz, but other frequency separations may be used. In some embodiments, for backwards compatibility the data tone numbers for 802.11a/n/ac may be used, e.g., 12, 13, 18, and 26. The row number $N_r$ may then be determined by Equation 3:

$$N_r = \left\lceil \frac{N_d Q}{N_c} \right\rceil$$

$$(3)$$

Where $\lceil \rceil$ is the ceiling function. Based on Equation 3, $N_r N_c \geq N_d Q$, i.e., the interleaver block is bigger than or equal to the input data block size for the given bandwidth allocation and for one spatial stream. Accordingly, the interleaver is illustrated below in Equation 4:

$$i = \begin{cases} i_o, & for\ c \leq C_M \\ i_o - c + c_M & for\ c > C_M \end{cases}$$

$$(4)$$

Where $C_M$ is a column index up to which the legacy interleaver as defined in Equation 1 is still usable such that $C_M = (N_d Q \bmod N_c)$, $c$ is the column index of the kth input bit where $k = 0,1,\cdots N_d Q\text{-}1$ and $c = (k \bmod N_c)$, $i_o$ is an output bit index computed by the legacy interleaver as defined in Equation 1 such that

$$i_o = N_r(k \bmod N_c) + \left\lfloor \frac{k}{N_c} \right\rfloor,$$ and $i$ takes values from

$0,1,\cdots N_d Q\text{-}1$. The term $c_M\text{-}c$ in Equation 4 may be treated as a correction to the legacy term $i_o$ for accounting for the reduced input block size. In some embodiments to reduce complexity, the selected interleaver described herein may also be backwards compatible with the operation of the block interleaver described for IEEE 802.11ax. In such embodiments, bits are sequentially read in row by row to an interleaver block and read out column by column from the interleaver block.

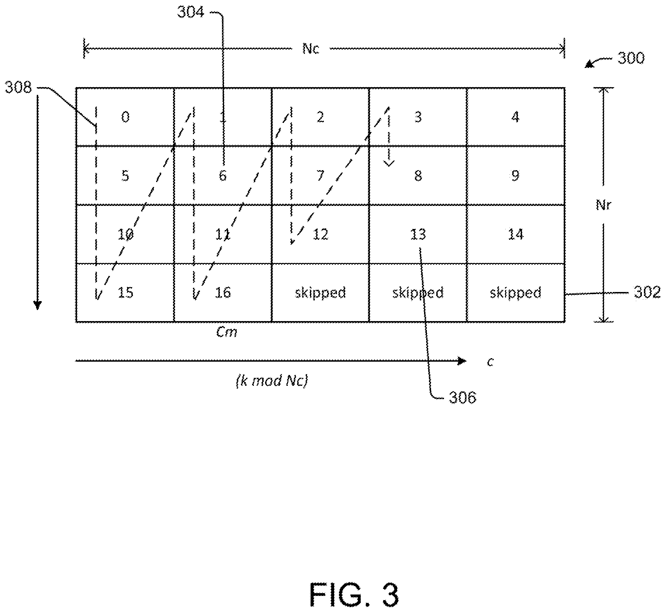

FIG. 3 depicts an interleaver block 300 illustrating an example of the interleaver depicted in Equation 4, for which $N_d$ = 17, $Q$ = 1, $N_c$ = 5, $N_r$ = 4, and $C_M$ = 2. As shown in FIG. 3, the interleaver block has $N_c$ number of columns and $N_r$ number of rows.

As mentioned above, the input bits may be read into the block interleaver 300 row by row from top to bottom. For example, using Equation 4 described above, for $k = 11$, $c = (11 \bmod 5 = 1 \le C_M)$ such that the first row of the interleaver of Equation 4 is used and the interleaver bit index 304 equals 6, as described below in Equation 5:

$$i = i_o = 4(11 \bmod 5) + \left\lfloor \frac{11}{5} \right\rfloor = 6$$

$$(5)$$

In another example, using Equation 4 described above, for $k = 8$, $c = (8 \bmod 5 = 3 > C_M)$ such that the second row of the interleaver of Equation 4 is used and the interleaver bit index 306 equals 13, as described below in Equations 6 and 7:

$$i_o = 4(8 \bmod 5) + \left\lfloor \frac{8}{5} \right\rfloor = 6$$

$$(6)$$

$$i = i_o - c + C_M = 13 - 3 + 2 = 12$$

$$(7)$$

As shown by arrow 308, the output bits (or the interleaved bits) may be read out of the block interleaver column by column from left to right. In contrast to the legacy interleavers, the interleaver block does not need to fully fill. For example, the last row 302 is partially filled for the interleaver. When the input bits are read out from the interleaver block 300, the unfilled entries are skipped. In contrast, the legacy interleavers mentioned above require the input bits to fill all entries in the interleaver block for proper operation. Advantageously, the interleaver enables unfilled entries in the interleaver block while providing backwards compatibility that adds relatively minimal processing overhead at each allocation.

As shown in FIG. 3, the bits in the interleaver block 300 contiguously fill the entries of the interleaver block row by row. When the input bits are read out from the block 300, the entries at the bottom row, as determined by $N_r N_c - N_d Q$, are skipped. In this embodiment, the input distance between adjacent output bits is at least $N_c$, but the output distance between two adjacent input bits may be less than $N_r$.

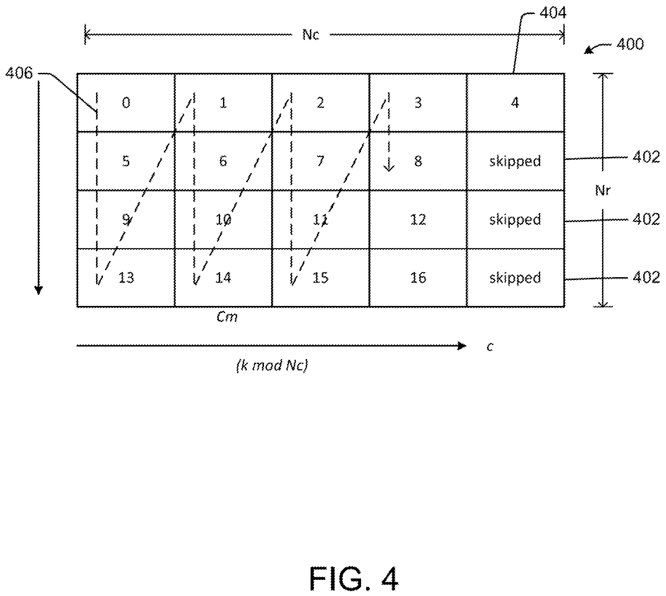

FIG. 4 depicts an interleaver block 400 for another embodiment of an interleaver in accordance with the techniques described herein. In the interleaver block 400 depicted in FIG. 4, the input bits do not contiguously fill the entries in the block 400. In contrast to the embodiment depicted in FIG. 3, the last entries 402 in the last column 404 shown in the lower right corner, as determined by $N_r N_c - N_d Q$, are skipped. However, as illustrated by arrow 406, the input bits are read out contiguously column by column without skipping. In this embodiment, the output distance between two adjacent input bits may be at least $N_r$, but the input distance between two adjacent output bits may be less than $N_c$. As will be appreciated, a similar equation to Equation 3 may be determined for the interleaver illustrated by interleaver block 400.

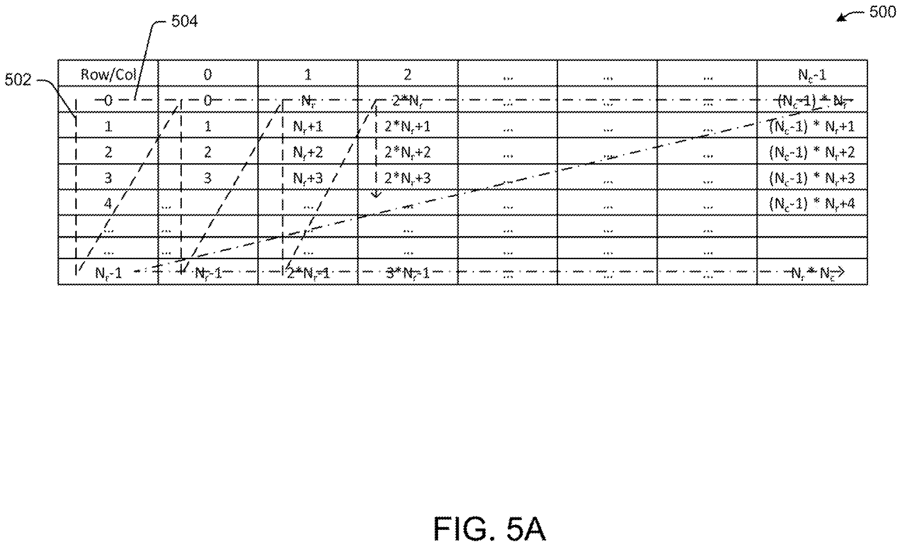

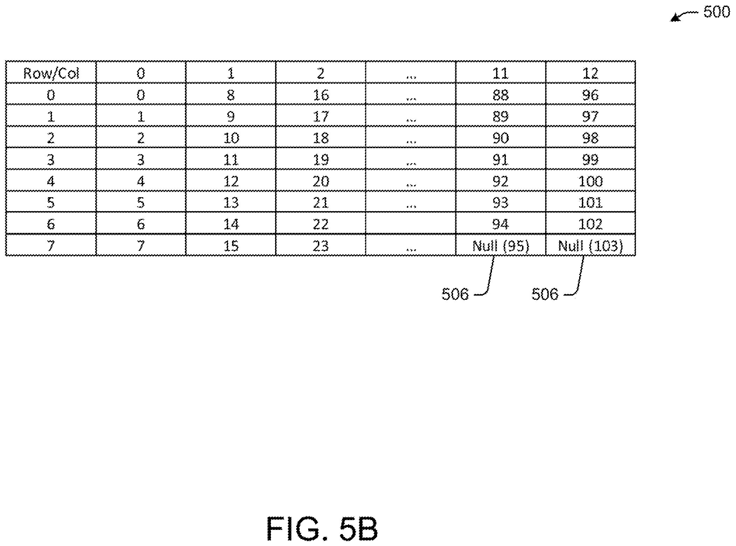

In some embodiments, Null bits may be used with the legacy interleaver described above. FIG. 5A illustrates an interleaver block of a legacy interleaver as a table 500 to show allocation of adjacent bits to different tones, in accordance with an embodiment of the present technique. The table 500 includes $N_r$ number of rows and $N_c$ number of columns and $N_r * N_c$ number of cells. As shown in FIG. 5 and arrow 502, the codebits are first read into the interleaver column by column. As shown by arrow 504, the codebits are read out row by row.

In some embodiments and as described above, the parameters $N_r$ and $N_c$ may be defined based on the allocated bandwidth. For example, in some embodiments for 20MHz bandwidth and quadrature phase shift keying (QPSK) modulation, $N_r = 4*2$ because QPSK has 2 bits per symbol and $N_c = 13$. Accordingly, $N_r * N_c = 8* 13 = 104 = 52*2$, which is the tones multiplied by the coded bits per OFDM symbol (N_CBPS). Thus, the encoded bits on 52 tones could be used to fully fill the interleaver.

FIG. 5B further illustrates filling of the table 500 described above to show allocation of Null bits (i.e., unfilled entries) in accordance with the present technique. As described above, as subchannels may have different DC, pilot, and band guard tone configurations, in some embodiments the data tones in the allocated bandwidth may vary even within the same bandwidth. If the number of codebits does not fully fill an interleaver block, Null bits may be used to fill the interleaver. For example, the table 500 depicts the allocation of 51 tones in a 20MHz allocated bandwidth instead the 52 tones (e.g., one tone may be reserved for a DC, pilot, or guard tone). Table 500 corresponds to an interleaver block having an example of Null bits allocated for 51 data tones. As discussed above, in such an example having a 20MHz and QPSK, $N_r = 8$ and $N_c = 13$. As shown in table 500, Null bits 506 may be inserted in the 95th and 103th encoded bits. Thus, the legacy interleaver may be fully filled through the use of the Null bits 506 and the legacy interleaver may be used even though the codebits do not fully fill the interleaver.

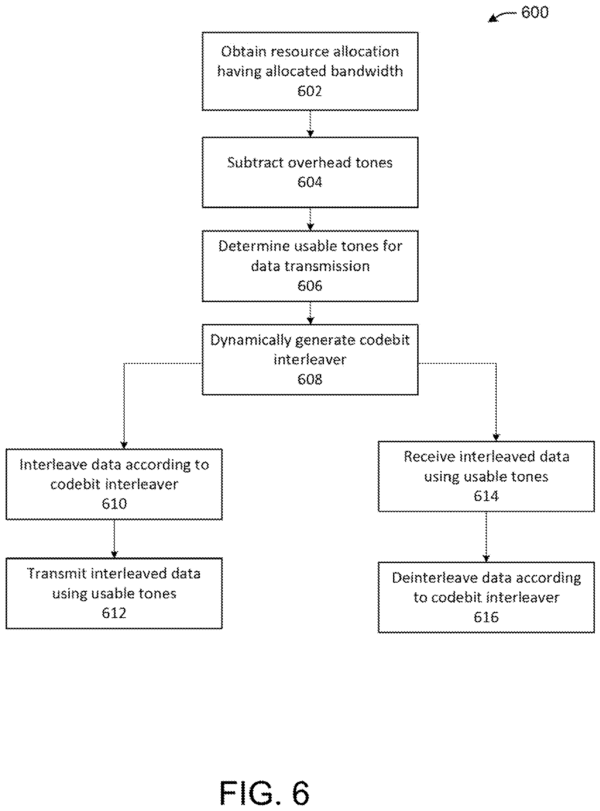

FIG. 6 depicts a process 600 for transmitting or receiving data over a wireless network, such as IEEE 802.11ax network, in accordance with the techniques described herein. Initially, a resource allocation having allocated bandwidth may be obtained (block 602). As described above, in some embodiments the resource allocation may use OFDMA modulation. Next, the overhead tones (e.g., the pilot tones, guard band tones, and DC tones) are subtracted from the resource allocation (block 604). After subtraction of the overhead tones, the usable tones for data transmission may be determined (block 606), such as according to the example described above and illustrated in FIG. 2.

Next, a codebit interleaver or symbol interleaver may be selected based on the usable tones (block 608), as discussed above and depicted above in Equation 4. As will be appreciated, in some embodiments, a codebit interleaver or symbol interleaver is dynamically generated for each resource allocation and number of usable tones, thus accommodating the variance in usable tones described above. In some embodiments, multiple interleavers (and de-interleavers) may be pre-defined and an interleaver (or de-interleaver) may be selected according to the allocation size, QAM size (i.e., the number of usable tones), or both. Each pre-defined interleaver (and de-interleaver) may cover a range of input block sizes. The generation criteria or selection criteria may be known to both the transmitter and receiver. If data will be transmitted, the data is interleaved according to the interleaver (block 610) and the interleaved data is transmitted over the wireless network using the usable tones (block 612). Alternatively, the interleaved data may be received over the wireless network using the usable tones (block 614) and the data may be de-interleaved according to the interleaver (block 616).

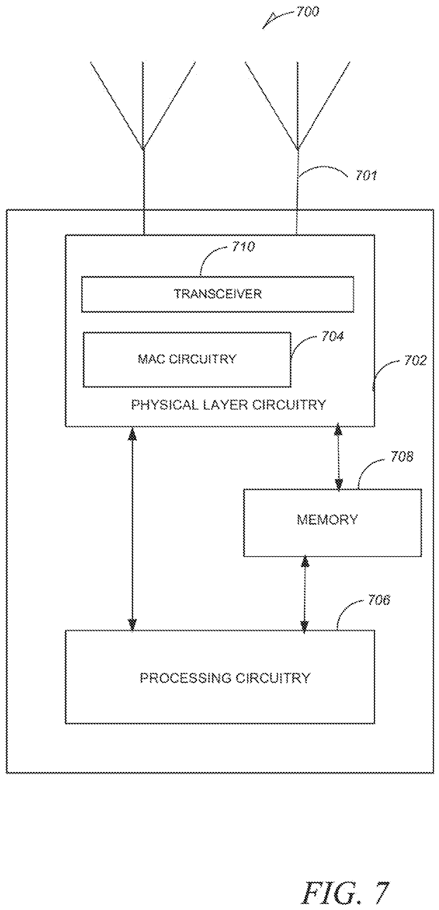

FIG. 7 shows a functional diagram of an exemplary communication station 700 in accordance with some embodiments. In one embodiment, FIG. 7 illustrates a functional block diagram of a communication station that may be suitable for use as an AP 102 (FIG. 1) or communication station STA 104 (FIG. 1) in accordance with some embodiments. The communication station 700 may also be suitable for use as a handheld device, mobile device, cellular telephone, smartphone, tablet, netbook, wireless terminal, laptop computer, femtocell, High Data Rate (HDR) subscriber station, access point, access terminal, or other personal communication system (PCS) device.

The communication station 700 may include physical layer circuitry 702 having a transceiver 710 for transmitting and receiving signals to and from other communication stations using one or more antennas 701. The physical layer circuitry 702 may also comprise medium access control (MAC) circuitry 704 for controlling access to the wireless medium. The communication station 700 may also include processing circuitry 706 and memory 708 arranged to perform the operations described herein. In some embodiments, the physical layer circuitry 702 and the processing circuitry 706 may be configured to perform operations detailed in FIGS. 2 - 6.

In accordance with some embodiments, the MAC circuitry 704 may be arranged to contend for a wireless medium and configure frames or packets for communicating over the wireless medium and the physical layer circuitry 702 may be arranged to transmit and receive signals. The physical layer circuitry 702 may include circuitry for modulation/demodulation, upconversion/downconversion, filtering, amplification, etc. In some embodiments, the processing circuitry 706 of the communication station 700 may include one or more processors. In some embodiments, two or more antennas 701 may be coupled to the physical layer circuitry 702 arranged for sending and receiving signals. The memory 708 may store information for configuring the processing circuitry 706 to perform operations for configuring and transmitting message frames and performing the various operations described herein. The memory 708 may comprise any type of memory, including non-transitory memory, for storing information in a form readable by a machine (e.g., a computer). For example, the memory 708 may comprise a computer-readable storage device may, read-only memory (ROM), random- access memory (RAM), magnetic disk storage media, optical storage media, flash-memory devices and other storage devices and media.

In some embodiments, the communication station 700 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), or another device that may receive and/or transmit information wirelessly.

In some embodiments, the communication station 700 may include one or more antennas 701. The antennas 701 may comprise one or more directional or omnidirectional antennas, including, for example, dipole antennas, monopole antennas, patch antennas, loop antennas, microstrip antennas or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 700 may include one or more of a keyboard, a display, a non-volatile memory port, multiple antennas, a graphics processor, an application processor, speakers, and other mobile device elements. The display may be an LCD screen including a touch screen.

Although the communication station 700 is illustrated as having several separate functional elements, two or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio- frequency integrated circuits (RFICs) and combinations of various hardware and logic circuitry for performing at least the functions described herein. In some embodiments, the functional elements of the communication station 700 may refer to one or more processes operating on one or more processing elements.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 700 may include one or more processors and may be configured with instructions stored on a computer-readable storage device memory.

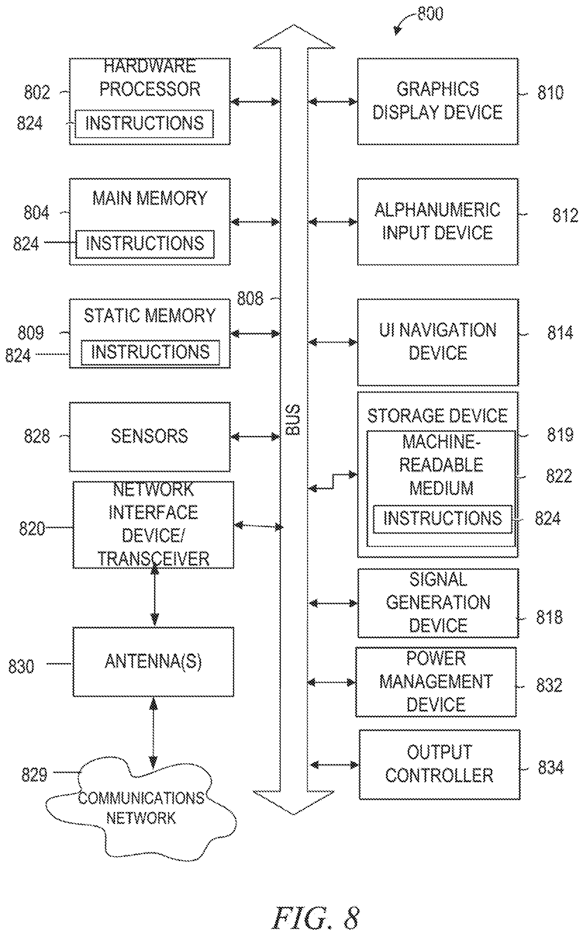

FIG. 8 illustrates a block diagram of an example of a machine 800 upon which any one or more of the techniques (e.g., methodologies) discussed herein may be performed. In alternative embodiments, the machine 800 may operate as a standalone device or may be connected (e.g., networked) to other machines. In a networked deployment, the machine 800 may operate in the capacity of a server machine, a client machine, or both in server-client network environments. In an example, the machine 800 may act as a peer machine in peer-to-peer (P2P) (or other distributed) network environment The machine 800 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include, or may operate on, logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions, where the instructions configure the execution units to carry out a specific operation when in operation. The configuring may occur under the direction of the executions units or a loading mechanism. Accordingly, the execution units are communicatively coupled to the computer readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 800 may include a hardware processor 802 (e.g., a central processing unit (CPU), a graphics processing unit (GPU), a hardware processor core, or any combination thereof), a main memory 804 and a static memory 806, some or all of which may communicate with each other via an interlink (e.g., bus) 808. The machine 800 may further include a power management device 832, a graphics display device 810, an alphanumeric input device 812 (e.g., a keyboard), and a user interface (UI) navigation device 814 (e.g., a mouse). In an example, the graphics display device 810, alphanumeric input device 812 and UI navigation device 814 may be a touch screen display. The machine 800 may additionally include a storage device (i.e., drive unit) 816, a signal generation device 818 (e.g., a speaker), a network interface device/transceiver 820 coupled to antenna(s) 830, and one or more sensors 828, such as a global positioning system (GPS) sensor, compass, accelerometer, or other sensor. The machine 800 may include an output controller 834, such as a serial (e.g., universal serial bus (USB), parallel, or other wired or wireless (e.g., infrared (IR), near field communication (NFC), etc.) connection to communicate with or control one or more peripheral devices (e.g., a printer, card reader, etc.)

The storage device 816 may include a machine readable medium 822 on which is stored one or more sets of data structures or instructions 824 (e.g., software) embodying or utilized by any one or more of the techniques or functions described herein. The instructions 824 may also reside, completely or at least partially, within the main memory 804, within the static memory 806, or within the hardware processor 802 during execution thereof by the machine 800. In an example, one or any combination of the hardware processor 802, the main memory 804, the static memory 806, or the storage device 816 may constitute machine readable media.

While the machine readable medium 822 is illustrated as a single medium, the term "machine readable medium" may include a single medium or multiple media (e.g., a centralized or distributed database, and/or associated caches and servers) configured to store the one or more instructions 824.

The term "machine readable medium" may include any medium that is capable of storing, encoding, or carrying instructions for execution by the machine 800 and that cause the machine 800 to perform any one or more of the techniques of the present disclosure, or that is capable of storing, encoding or carrying data structures used by or associated with such instructions. Non-limiting machine-readable medium examples may include solid-state memories, and optical and magnetic media. In an example, a massed machine-readable medium comprises a machine readable medium with a plurality of particles having resting mass. Specific examples of massed machine-readable media may include: non-volatile memory, such as semiconductor memory devices (e.g., Electrically Programmable Read-Only Memory (EPROM), or Electrically Erasable Programmable Read-Only Memory (EEPROM)) and flash memory devices; magnetic disks, such as internal hard disks and removable disks; magneto-optical disks; and CD-ROM and DVD-ROM disks.

The instructions 824 may further be transmitted or received over a communications network 826 using a transmission medium via the network interface device/transceiver 820 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), Plain Old Telephone (POTS) networks, wireless data networks (e.g., Institute of Electrical and Electronics Engineers (IEEE) 802.11 family of standards known as Wi-Fi®, IEEE 802.16 family of standards known as WiMax®), IEEE 802.15.4 family of standards, and peer-to-peer (P2P) networks, among others. In an example, the network interface device/transceiver 620 may include one or more physical jacks (e.g., Ethernet, coaxial, or phone jacks) or one or more antennas to connect to the communications network 626. In an example, the network interface device/transceiver 620 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 600, and includes digital or analog communications signals or other intangible media to facilitate communication of such software.

Further Embodiments

In a first example embodiment, there is disclosed a method to transmit data over a wireless network including determining tones for data transmission from a resource allocation and selecting an interleaver based on the tones, wherein the interleaver comprises a block interleaver having unfilled entries. The method further includes generating interleaved data according to the interleaver using at least one of the tones.

In some embodiments, the method further includes writing bits row by row into the block interleaver.

In additional or alternative embodiments, the method further includes interleaving data according to the interleaver to generate the interleaved data. In additional or alternative embodiments, the method further includes reading bits column by column out of the block interleaver. In some embodiments, reading bits column by column out of the block interleaver includes skipping the unfilled entries. In some embodiments, the tones vary based one of more of a link direction, the allocated bandwidth, and an allocation position. In some embodiments, a bit index $i$ of the interleaver includes

$$ i = \begin{cases} i_o, & for\ c \leq C_M \\ i_o - c + c_M & for\ c > C_M \end{cases} $$

Where: $i_o$ = is an output bit index, $C_M = (N_d Q \bmod N_c)$, $N_d$ is a number of tones, $Q$ is a number of codebits, $N_c$ is a number of columns in the block interleaver, $c = (k \bmod N_c)$, and $k = 0, 1, \cdots N_d Q - 1$. In some embodiments, the interleaver comprises a symbol interleaver. In some embodiments, selecting the interleaver according to the tones includes generating the interleaver based on the tones. In some embodiments, determining tones for data transmission includes determining overhead tones from the resource allocation and excluding the overhead tones for data transmission.

In a second example embodiment, there is disclosed a tangible non-transitory machine-readable medium storing computer-executable instructions to transmit data over a wireless network that, when executed by a processor, configure the processor to perform operations that include determining tones for data transmission from a resource allocation and selecting an interleaver based on the tones, wherein the interleaver comprises a block interleaver having unfilled entries.. The computer readable medium includes further computer-executable instructions that, when executed by the at least one processor, configure the processor to perform operations that include generating interleaved data according to the interleaver using at least one of the tones..

In some embodiments, the computer readable medium includes further computer-executable instructions that, when executed by the at least one processor, configure the processor to perform operations that include writing bits row by row into the block interleaver. In additional or alternative embodiments, the computer readable medium includes further computer-executable instructions that, when executed by the at least one processor, configure the processor to perform operations that include interleaving data according to the interleaver to generate the interleaved data. In additional or alternative embodiments, the computer readable medium includes further computer-executable instructions that, when executed by the at least one processor, configure the processor to perform operations that include reading bits column by column out of the block interleaver. In some embodiments, reading bits column by column out of the block interleaver includes skipping the unfilled entries. In some embodiments, the tones vary based one of more of a link direction, the allocated bandwidth, and an allocation position. In some embodiments, a bit index $i$ of the interleaver includes

$$i = \begin{cases} i_o, & for\ c \leq C_M \\ i_o - c + c_M & for\ c > C_M \end{cases}$$

Where: $i_o$ = is an output bit index, $C_M = (N_dQ \bmod N_c)$, $N_d$ is a number of tones, $Q$ is a number of codebits, $N_c$ is a number of columns in the block interleaver, $c = (k \bmod N_c)$, and $k = 0,1,\cdots N_dQ$-1.

In a third example embodiment, there is disclosed a device including one or more processors and having circuitry configured to:. determine tones for data transmission from a resource allocation and select an interleaver based on the tones, wherein the interleaver comprises a block interleaver having unfilled entries. The one or more processors have circuitry further including logic to: generate interleaved data according to the interleaver using at least one of the tones.

In some embodiments, the one or more processers having circuitry further including logic to: write bits row by row into the block interleaver.. In additional or alternative embodiments, the one or more processers having circuitry further including logic to: read bits column by column out of the block interleaver. In some embodiments, reading bits column by column out of the block interleaver includes skipping the unfilled entries. In some embodiments, the tones vary based one of more of a link direction, the allocated bandwidth, and an allocation position. In some embodiments, a bit index $i$ of the interleaver includes

$$i = \begin{cases} i_o, & for\ c \leq C_M \\ i_o - c + c_M & for\ c > C_M \end{cases}$$

Where: $i_o$ = is an output bit index, $C_M = (N_dQ \bmod N_c)$, $N_d$ is a number of tones, $Q$ is a number of codebits, $N_c$ is a number of columns in the block interleaver, $c = (k \bmod N_c)$, and $k = 0,1,\cdots N_dQ$-1.

In a fourth example embodiment, a method to transmit data over a wireless network is disclosed that includes determining tones for data transmission from the resource allocation and selecting an interleaver based on the tones, wherein the interleaver comprises a block interleaver having unfilled entries. The method also includes de-interleaving the interleaved data using the interleaver.

In some embodiments, the method further includes writing bits row by row into the block interleaver. In additional or alternative embodiments, the method further includes interleaving data according to the interleaver to generate the interleaved data. In additional or alternative embodiments, the method further includes reading bits column by column out of the block interleaver. In some embodiments, reading bits column by column out of the block interleaver includes skipping the unfilled entries. In some embodiments, the tones vary based one of more of a link direction, the allocated bandwidth, and an allocation position. In some embodiments, a bit index $i$ of the interleaver includes

$$i = \begin{cases} i_o, & for\ c \leq C_M \\ i_o - c + c_M & for\ c > C_M \end{cases}$$

Where: $i_O$ = is an output bit index, $C_M = (N_dQ \bmod N_c)$, $N_d$ is a number of tones, $Q$ is a number of codebits, $N_c$ is a number of columns in the block interleaver, $c = (k \bmod N_c)$, and $k = 0,1,\cdots N_dQ$-1.

In a fifth example embodiment, a tangible non-transitory computer-readable medium storing computer-executable instructions to transmit data over a wireless network that, when executed by a processor, configure the processor to perform operations that include determining tones for data transmission from the resource allocation and selecting an interleaver based on the tones, wherein the interleaver comprises a block interleaver having unfilled entries. The tangible non-transitory computer-readable medium further includes computer-executable instructions that, when executed by a processor, configure the processor to perform operations that include de-interleaving the interleaved data using the interleaver.

In some embodiments, the computer readable medium includes further computer-executable instructions that, when executed by the at least one processor, configure the processor to perform operations that include writing bits row by row into the block interleaver. In additional or alternative embodiments, the computer readable medium includes further computer-executable instructions that, when executed by the at least one processor, configure the processor to perform operations that include interleaving data according to the interleaver to generate the interleaved data. In additional or alternative embodiments, the computer readable medium includes further computer-executable instructions that, when executed by the at least one processor, configure the processor to perform operations that include reading bits column by column out of the block interleaver. In some embodiments, reading bits column by column out of the block interleaver includes skipping the unfilled entries. In some embodiments, the tones vary based one of more of a link direction, the allocated bandwidth, and an allocation position. In some embodiments, a bit index $i$ of the interleaver includes

$$i = \begin{cases} i_o, & for\ c \le C_M \\ i_o - c + c_M & for\ c > C_M \end{cases}$$

Where: $i_o$ = is an output bit index, $C_M = (N_d Q \bmod N_c)$, $N_d$ is a number of tones, $Q$ is a number of codebits, $N_c$ is a number of columns in the block interleaver, $c = (k \bmod N_c)$, and $k = 0, 1, \cdots N_d Q\text{-}1$.

In a sixth example embodiment, a device is disclosed having means for determining tones for data transmission from a resource allocation and means for selecting an interleaver based on the tones, wherein the interleaver comprises a block interleaver having unfilled entries. The device further includes means for generating interleaved data according to the interleaver using at least one of the tones.

In some embodiments, the device further includes means for writing bits row by row into the block interleaver. In additional or alternative embodiments, the device further includes means for reading bits column by column out of the block interleaver. In some embodiments, reading bits column by column out of the block interleaver includes skipping the unfilled entries. In some embodiments, the tones vary based one of more of a link direction, the allocated bandwidth, and an allocation position. In some embodiments, a bit index $i$ of the interleaver includes

$$i = \begin{cases} i_o, & for\ c \le C_M \\ i_o - c + c_M & for\ c > C_M \end{cases}$$

Where: $i_o$ = is an output bit index, $C_M = (N_d Q \bmod N_c)$, $N_d$ is a number of tones, $Q$ is a number of codebits, $N_c$ is a number of columns in the block interleaver, $c = (k \bmod N_c)$, and $k = 0, 1, \cdots N_d Q\text{-}1$.

In a seventh example embodiment, there is disclosed a device including one or more processors having circuitry including logic to: determine tones for data transmission from the resource allocation and select an interleaver based on the tones, wherein the interleaver comprises a block interleaver having unfilled entries. The one or more processors have circuitry that further includes logic to: de-interleave the interleaved data using the interleaver.

In some embodiments, the one or more processors have circuitry that further includes logic to: write bits row by row into the block interleaver. In additional or alternative embodiments, the one or more processors have circuitry that further includes logic to: read bits column by column out of the block interleaver. In some embodiments, reading bits column by column out of the block interleaver includes skipping the unfilled entries. In some embodiments, the tones vary based one of more of a link direction, the allocated bandwidth, and an allocation position. In some embodiments, a bit index $i$ of the interleaver includes

Where: $i_o$ = is an output bit index, $C_M = (N_d Q \bmod N_c)$, $N_d$ is a number of tones, $Q$ is a number of codebits, $N_c$ is a number of columns in the block interleaver, $c = (k \bmod N_c)$, and $k = 0, 1, \cdots N_d Q\text{-}1$.

In an eighth example embodiment, there is disclosed a device having means for determining tones for data transmission from the resource allocation and means for selecting an interleaver based on the tones, wherein the interleaver comprises a block interleaver having unfilled entries. The device further includes means for de-interleaving the interleaved data using the interleaver.

In some embodiments, the device includes means for writing bits row by row into the block interleaver. In additional or alternative embodiments, the device includes means for reading bits column by column out of the block interleaver. In some embodiments, reading bits column by column out of the block interleaver includes skipping the unfilled entries. In some embodiments, the tones vary based one of more of a link direction, the allocated bandwidth, and an allocation position. In some embodiments, a bit index $i$ of the interleaver includes

$$i = \begin{cases} i_o, & for\ c \le C_M \\ i_o - c + c_M & for\ c > C_M \end{cases}$$

Where: $i_o$ = is an output bit index, $C_M = (N_d Q \bmod N_c)$, $N_d$ is a number of tones, $Q$ is a number of codebits, $N_c$ is a number of columns in the block interleaver, $c = (k \bmod N_c)$, and $k = 0, 1, \cdots N_d Q\text{-}1$.

## Claims

1. A method to transmit (600) data over a wireless network, comprising:

   determining (606) tones for data transmission from a resource allocation, wherein determining tones for data transmission comprises:

   determining overhead tones from the resource allocation, and
   excluding (604) the overhead tones for data transmission;

   selecting an interleaver based on the tones, wherein the interleaver comprises a block interleaver having a null bit in place of each of the excluded overhead tones; and
   generating (610) interleaved data according to the interleaver using at least one of the tones.

2. The method of claim 1, comprising writing bits row by row into the block interleaver.

3. The method of claim 1 or 2, comprising interleaving data according to the interleaver to generate the interleaved data.

4. The method of claim 1, 2, or 3, comprising reading bits column by column out of the block interleaver.

5. The method of claim 1, 2, 3, or 4, wherein the tones vary based one of more of a link direction, an allocated bandwidth, and an allocation position.

6. The method of claim 1, 2, 3, 4, or 5, wherein a bit index $i$ of the interleaver comprises:

$$i = \begin{cases} i_o, & for\ c \leq C_M \\ i_o - c + c_M & for\ c > C_M \end{cases}$$

where: $i_o$ = is an output bit index, $C_M = (N_d Q \bmod N_c)$, $N_d$ is a number of tones, $Q$ is a number of codebits, $N_c$ is a number of columns in the block interleaver, $c = (k \bmod N_c)$, $k$ is the number of the input bit and $k = 0,1,\cdots N_d Q-1$.

7. The method of claim 1, 2, 3, 4, 5, or 6, wherein the interleaver comprises a symbol interleaver.

8. The method of claim 1, 2, 3, 4, 5, 6, or 7, wherein selecting the interleaver according to the tones comprises generating the interleaver based on the tones.

9. An apparatus comprising means to perform a method as claimed in any preceding claim.

10. A tangible non-transitory machine-readable medium (822) storing computer-executable instructions (824) to transmit data over a wireless network that, when executed by a processor (802), configure the processor to perform operations comprising:

determining tones for data transmission from a resource allocation, wherein determining tones for data transmission comprises:

determining overhead tones from the resource allocation, and excluding the overhead tones for data transmission;

selecting an interleaver based on the tones, wherein the interleaver comprises a block interleaver having a null bit in place of each of the excluded overhead tones; and generating interleaved data according to the interleaver using at least one of the tones.

11. The tangible non-transitory machine-readable medium (822) of claim 10, the processor (802) further configured to perform operations comprising: writing bits row by row into the block interleaver.

12. A method (600) to receive data over a wireless network, comprising:

determining (606) tones usable for data reception from a resource allocation, wherein determining tones for data reception comprises:

determining overhead tones from the resource allocation, and excluding (604) the overhead tones for data reception;

selecting an interleaver based on the tones, wherein the interleaver comprises a block interleaver having a null bit in place of each of the excluded overhead tones; receiving interleaved data using the usable tones; and de-interleaving (616) the interleaved data using the interleaver.

**Patentansprüche**

1. Verfahren zum Übertragen (600) von Daten über ein drahtloses Netzwerk, umfassend:

das Bestimmen (606) von Tönen zur Datenübertragung aus einer Ressourcenzuweisung, wobei das Bestimmen von Tönen zur Datenübertragung umfasst:

das Bestimmen von Overhead-Tönen aus der Ressourcenzuweisung und das Ausschließen (604) der Overhead-Töne für die Datenübertragung;

das Auswählen eines Interleavers auf Grundlage der Töne, wobei der Interleaver einen Block-Interleaver mit einem Null-Bit anstelle jedes der ausgeschlossenen Overhead-Töne umfasst; und das Erzeugen (610) verschachtelter Daten entsprechend dem Interleaver unter Verwendung von mindestens einem der Töne.

2. Verfahren nach Anspruch 1, das das zeilenweise Schreiben von Bits in den Block-Interleaver umfasst.

**3.** Verfahren nach Anspruch 1 oder 2, das das Verschachteln von Daten entsprechend dem Interleaver umfasst, um die verschachtelten Daten zu erzeugen.

**4.** Verfahren nach Anspruch 1, 2 oder 3, das das spaltenweise Lesen von Bits aus dem Block-Interleaver umfasst.

**5.** Verfahren nach Anspruch 1, 2, 3 oder 4, wobei die Töne auf Grundlage eines von mehreren von einer Verbindungsrichtung, einer zugewiesenen Bandbreite und einer Zuweisungsposition variieren.

**6.** Verfahren nach Anspruch 1, 2, 3, 4 oder 5, wobei ein Bit-Index i des Interleavers umfasst:

$$i = \begin{cases} i_o, & f\ddot{u}r\ c \leq C_M \\ i_o - c + c_M & f\ddot{u}r\ c > C_M \end{cases}$$

wobei: $i_o$ ein Ausgangsbit-Index ist, $C_M = (N_d\ Q \bmod N_c)$, $N_d$ eine Anzahl von Tönen ist, $Q$ eine Anzahl von Codebits ist, $N_c$ eine Anzahl von Spalten in dem Block-Interleaver ist, $c = (k \bmod N_c)$, $k$ die Nummer des Eingangsbits ist und $k = 0, 1, \ldots N_d\ Q\text{-}1$.

**7.** Verfahren nach Anspruch 1, 2, 3, 4, 5 oder 6, wobei der Interleaver einen Symbol-Interleaver umfasst.

**8.** Verfahren nach Anspruch 1, 2, 3, 4, 5, 6 oder 7, wobei das Auswählen des Interleavers entsprechend den Tönen das Erzeugen des Interleavers auf Grundlage der Töne umfasst.

**9.** Vorrichtung, die eine Einrichtung zum Ausführen eines Verfahrens nach einem der vorhergehenden Ansprüche aufweist.

**10.** Greifbares nichtflüchtiges maschinenlesbares Medium (822), das computerausführbare Anweisungen (824) zum Übertragen von Daten über ein drahtloses Netzwerk speichert, die bei Ausführung durch einen Prozessor (802) den Prozessor dafür konfigurieren, Operationen durchzuführen, die umfassen:

das Bestimmen von Tönen zur Datenübertragung aus einer Ressourcenzuweisung, wobei das Bestimmen von Tönen zur Datenübertragung umfasst:

das Bestimmen von Overhead-Tönen aus der Ressourcenzuweisung und das Ausschließen der Overhead-Töne für die Datenübertragung;

das Auswählen eines Interleavers auf Grundlage der Töne, wobei der Interleaver einen Block-Interleaver mit einem Null-Bit anstelle jedes der ausgeschlossenen Overhead-Töne umfasst; und das Erzeugen verschachtelter Daten entsprechend dem Interleaver unter Verwendung von mindestens einem der Töne.

**11.** Greifbares nichtflüchtiges maschinenlesbares Medium (822) nach Anspruch 10, wobei der Prozessor (802) ferner dafür konfiguriert ist, Operationen durchzuführen, die umfassen: das zeilenweise Schreiben von Bits in den Block-Interleaver.

**12.** Verfahren (600) zum Empfangen von Daten über ein drahtloses Netzwerk, umfassend:

das Bestimmen (606) von Tönen, die zum Datenempfang aus einer Ressourcenzuweisung verwendbar sind, wobei das Bestimmen von Tönen für den Datenempfang umfasst:

das Bestimmen von Overhead-Tönen aus der Ressourcenzuweisung und das Ausschließen (604) der Overhead-Töne für den Datenempfang;

das Auswählen eines Interleavers auf Grundlage der Töne, wobei der Interleaver einen Block-Interleaver mit einem Null-Bit anstelle jedes der ausgeschlossenen Overhead-Töne umfasst; das Empfangen verschachtelter Daten unter Nutzung der verwendbaren Töne; und das Entschachteln (616) der verschachtelten Daten unter Verwendung des Interleavers.

**Revendications**

**1.** Procédé pour transmettre (600) des données sur un réseau sans fil, comprenant les étapes suivantes : déterminer (606) des tons pour la transmission de données à partir d'une allocation de ressources, où la détermination de tons pour la transmission de données comprend :

de déterminer des tons en surdébit à partir de l'allocation de ressources, et d'exclure (604) les tons en surdébit pour la transmission de données ; sélectionner un entrelaceur sur la base des tons, où l'entrelaceur comprend un entrelaceur de blocs ayant un bit nul à la place de chacun des tons en surdébit exclus ; et générer (610) des données entrelacées conformément à l'entrelaceur en utilisant au moins un des tons.

**2.** Procédé selon la revendication 1, comprenant d'écrire des bits ligne par ligne dans l'entrelaceur de blocs.

**3.** Procédé selon la revendication 1 ou la revendication 2, comprenant d'entrelacer les données conformément à l'entrelaceur pour générer les données entrelacées.

**4.** Procédé selon les revendications 1, 2 ou 3, comprenant de lire des bits colonne par colonne depuis l'entrelaceur de blocs.

**5.** Procédé selon les revendications 1, 2, 3 ou 4, dans lequel les tons varient en fonction d'un ou plusieurs paramètres parmi les suivants : une direction de liaison, une largeur de bande allouée et une position d'allocation.

**6.** Procédé selon les revendications 1, 2, 3, 4 ou 5, dans lequel un index de bit i de l'entrelaceur comprend :

$$i = \begin{cases} i_0 & pour\ c \le C_M \\ i_0 - c + c_M & pour\ c > C_M \end{cases}$$

où : $i_0$ est un index de bit de sortie, $C_M = (N_d Q \bmod N_c)$, $N_d$ est un nombre de tons, $Q$ est un nombre de bits de code, $N_c$ est un nombre de colonnes dans l'entrelaceur de blocs, $c = (k \bmod N_c)$, $k$ est le numéro du bit d'entrée, et $k = 0, 1, ..., N_d Q - 1$.

**7.** Procédé selon les revendications 1, 2, 3, 4, 5 ou 6, dans lequel l'entrelaceur comprend un entrelaceur de symbole.

**8.** Procédé selon les revendications 1, 2, 3, 4, 5, 6 ou 7, dans lequel la sélection de l'entrelaceur conformément aux tons comprend de générer l'entrelaceur en fonction des tons.

**9.** Appareil comprenant des moyens pour exécuter un procédé tel que revendiqué dans l'une quelconque des revendications précédentes.

**10.** Support tangible non transitoire lisible par machine (822) stockant des instructions exécutables par ordinateur (824) pour transmettre des données sur un réseau sans fil qui, lorsqu'elles sont exécutées par un processeur (802), configurent le processeur pour exécuter des opérations comprenant les étapes suivantes :
déterminer des tons pour la transmission de données à partir d'une allocation de ressources, où la détermination de tons pour la transmission de données comprend :

de déterminer des tons en surdébit à partir de l'allocation de ressources, et
d'exclure les tons en surdébit pour la transmission de données ;

sélectionner un entrelaceur sur la base des tons, où l'entrelaceur comprend un entrelaceur de blocs ayant un bit nul à la place de chacun des tons en surdébit exclus ; et
générer des données entrelacées conformément à l'entrelaceur en utilisant au moins un des tons.

**11.** Support tangible non transitoire lisible par machine (822) selon la revendication 10, le processeur (802) étant en outre configuré pour exécuter des opérations comprenant d'écrire des bits ligne par ligne dans l'entrelaceur de blocs.

**12.** Procédé (600) pour recevoir des données sur un réseau sans fil, comprenant les étapes suivantes :
déterminer (606) les tons utilisables pour la réception de données à partir d'une allocation de ressources, où la détermination de tons pour la réception de données comprend :

de déterminer des tons en surdébit à partir de l'allocation de ressources, et
d'exclure (604) les tons en surdébit pour la réception de données ;
sélectionner un entrelaceur sur la base des tons, où l'entrelaceur comprend un entrelaceur de blocs ayant un bit nul à la place de chacun des tons en surdébit exclus ;
recevoir les données entrelacées au moyen des tons utilisables ; et
désentrelacer (616) les données entrelacées au moyen de l'entrelaceur.

ToF Message Exchange

FIG. 1

FIG. 2

EP 3 152 853 B1

FIG. 3

FIG. 4

| Row/Col | 0 | 1 | 2 | ... | ... | ... | $N_c-1$ |
|---|---|---|---|---|---|---|---|
| 0 | 0 | $N_r$ | $2*N_r$ | ... | ... | ... | $(N_c-1)*N_r$ |
| 1 | 1 | $N_r+1$ | $2*N_r+1$ | ... | ... | ... | $(N_c-1)*N_r+1$ |
| 2 | 2 | $N_r+2$ | $2*N_r+2$ | ... | ... | ... | $(N_c-1)*N_r+2$ |
| 3 | 3 | $N_r+3$ | $2*N_r+3$ | ... | ... | ... | $(N_c-1)*N_r+3$ |
| 4 | ... | ... | ... | ... | ... | ... | $(N_c-1)*N_r+4$ |
| ... | ... | | | ... | ... | ... | ... |
| ... | ... | ... | ... | ... | ... | ... | ... |
| $N_r-1$ | $N_r-1$ | $2*N_r-1$ | $3*N_r-1$ | ... | ... | ... | $N_r*N_c$ |

502

504

500

FIG. 5A

EP 3 152 853 B1

500

| Row/Col | 0 | 1 | 2 | ... | 11 | 12 |
|---------|---|---|---|-----|-----|-----|
| 0 | 0 | 8 | 16 | ... | 88 | 96 |
| 1 | 1 | 9 | 17 | ... | 89 | 97 |
| 2 | 2 | 10 | 18 | ... | 90 | 98 |
| 3 | 3 | 11 | 19 | ... | 91 | 99 |
| 4 | 4 | 12 | 20 | ... | 92 | 100 |
| 5 | 5 | 13 | 21 | ... | 93 | 101 |
| 6 | 6 | 14 | 22 | | 94 | 102 |
| 7 | 7 | 15 | 23 | ... | Null (95) | Null (103) |

506 ⌐          506 ⌐

FIG. 5B

FIG. 6

*FIG. 7*

*FIG. 8*

**EP 3 152 853 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 54188714 A
- US 62009774 A
- US 2010260115 A1